# FASCICULE DE BREVET EUROPEEN

(11) **EP 4 171 999 B1**
(45) Date de publication et mention de la délivrance du brevet: **30.07.2025**
(21) Numéro de dépôt: 21746071.6
(22) Date de dépôt: 24.06.2021
(51) Int. Cl.: B60R 7/06, B60R 11/02, B62D 25/14

(54) **VÉHICULE AUTOMOBILE DONT LA PLANCHE DE BORD COMPREND UN AGENCEMENT D'ESPACE DE RANGEMENT OPTIMISÉ**
KRAFTFAHRZEUG MIT EINER OPTIMIERTEN STAURAUMANORDNUNG IM ARMATURENBRETT
MOTOR VEHICLE WITH AN OPTIMISED STORAGE SPACE ARRANGEMENT IN THE DASHBOARD

(30) Priorité: 29.06.2020 FR 2006821
(43) Date de publication de la demande: 03.05.2023
(73) Titulaire: Stellantis Auto SAS, 78300 Poissy (FR)
(72) Inventeur: BORDE, Olivier, 25700 VALENTIGNEY (FR); JOUFFRAY, Nicolas, 70400 CHAGEY (FR); PORET, Benoit, 78117 CHATEAUFORT (FR)
(74) Mandataire: BCIP
(86) Numéro de dépôt international: PCT/FR2021/051165
(87) Numéro de publication internationale: WO 2022/003281

(56) Documents cités:
- EP-A1- 1 431 123
- WO-A1-2018/128979
- CN-A- 111 152 654
- DE-A1- 10 063 190
- FR-A1- 2 945 493
- FR-A1- 3 021 931
- FR-A1- 3 023 757
- FR-A1- 3 075 125
- KR-U- 19980 048 083
- US-A1- 2012 139 283

## Description

La présente invention concerne les véhicules automobiles avec une planche de bord comprenant au moins un espace de rangement disposé en regard d'un siège passager avant.

Les véhicules automobiles comprennent une planche de bord montée sur une traverse de planche de bord. Du côté passager, la planche de bord comprend traditionnellement une façade dans laquelle est ménagé au moins un équipement de rangement. Par exemple, de nombreux véhicules comprennent un équipement de rangement de type boîte à gant qui permet de stocker des objets ou des documents. En général la boîte à gant est formée d'un espace fermé par une porte pivotante.

Le volume intérieur de rangement est limité par la présence d'autres éléments derrière la façade de la planche de bord comme par exemple des conduites d'air, une traverse de planche de bord ou un coussin gonflable de sécurité.

La façade de la planche de bord peut être divisée en une partie inférieure et une partie supérieure disposées de part et d'autre de la traverse de planche de bord selon la verticale, de sorte à ce que la partie inférieure soit placée en regard des genoux et des jambes du passager. Afin d'optimiser l'espace de rangement, l'équipement de rangement est avantageusement disposé de façon à ne pas être traversé par la traverse de planche de bord.

Le coussin gonflable de sécurité est disposé dans la partie supérieure de la façade de la planche de bord. Il est donc difficile d'intégrer des équipements dans cette partie supérieure de la façade, et en conséquence le ou les équipements de rangement sont de préférence disposés dans la partie inférieure de la façade.

L'intégration d'un équipement de rangement devant le passager avant est aussi limitée par les contraintes d'espace inhérentes au type de véhicule. Par exemple dans un véhicule de type berline, l'espace correspondant à la partie inférieure de la façade est limité en hauteur par rapport à un véhicule de type utilitaire. Il existe néanmoins un besoin d'optimisation de l'espace disponible qui permette d'offrir de meilleures prestations en matière de rangement et/ou d'équipement de support dans un environnement restreint.

Il existe, en plus des demandes d'équipement de rangement, une demande pour des équipements de support qui soient agencés sur la planche de bord, tels que des équipements de support d'appareils électroniques mobiles comme des téléphones mobiles de type « smartphone » ou des tablettes numériques. Les équipements de supports connus de type comprenant une ventouse ne sont pas satisfaisants sous plusieurs aspects. En premier lieu, ils dénaturent l'aspect esthétique de la planche de bord, ensuite la fixation n'est ni solide ni fiable, et enfin ils ne répondent pas aux exigences en matière de sécurité en particulier dans le cadre du déploiement d'un coussin gonflable de sécurité lors d'une collision du véhicule. Comme on l'aura compris, le support et/ou l'appareil électronique mobile ne doivent pas gêner le déploiement du coussin gonflable de sécurité d'une part, mais ne doivent pas non plus être projetés sur le passager du fait de ce déploiement. Par ailleurs, le passager ne doit pas heurter le support et/ou l'appareil électronique mobile lors d'une collision.

Le document FR 3 056 504 propose un agencement de planche de bord d'un véhicule automobile comprenant un dispositif de support pour appareil électronique mobile. Le dispositif comprend un cadre support disposé dans un évidement aménagé dans la partie supérieure de la planche de bord. L'évidement est préformé pour adopter le profil du cadre support. Le cadre support est monté pivotant et peut être escamoté dans l'évidement ou sorti vers le bas de l'évidement. Un compartiment de rangement est placé au-dessus du dispositif de support, et un coussin gonflable de sécurité est placé dans une partie inférieure de la façade de la planche de bord. Cet agencement n'est pas applicable aux véhicules comprenant un coussin gonflable de sécurité dans la partie supérieure de la façade.

Dans le document US 2018/0361942, un agencement de planche de bord d'un véhicule automobile comprend un espace de rangement fermé par un couvercle au niveau du passager avant. L'espace de rangement comprend deux compartiments. Un des compartiments est formé par un tiroir et l'autre est un bac rotatif se trouvant en dessous du tiroir. Les deux compartiments sont accessibles tour à tour en fonction de la position du couvercle. Cet agencement est complexe et ne propose pas de dispositif permettant de positionner un appareil électronique mobile.

Le document FR3021931 décrit un véhicule selon le préambule de la revendication 1 comprenant une planche de bord avec un dispositif de support d'un appareil électronique. Le document FR2945493 décrit une planche de bord avec deux rangements, dont rangement sous la forme d'un tiroir. Le document EP1431123 décrit un rangement comportant un volet rotatif et un volume dans lequel est disposé une boîte de rangement pivotante.

L'invention a pour objectif de répondre à au moins un des inconvénients et problèmes rencontrés dans l'art antérieur. A cet effet, l'invention propose une solution aux problèmes d'optimisation de l'espace alloué aux équipements de rangement dans la planche de bord d'un véhicule automobile. En particulier, l'invention permet de répondre à la fois à la problématique d'optimisation d'un espace restreint et de diversification des équipements proposés. Enfin l'invention propose de répondre aux demandes d'équipement de rangement et de support d'une manière robuste et fiable, et qui soit conforme aux exigences en matière de sécurité.

A cet effet et selon un premier aspect, l'invention concerne un véhicule automobile selon la revendication 1 et comprenant une planche de bord transversale montée sur une traverse de planche de bord ; la planche de bord montrant un côté passager agencé en regard d'un siège passager avant, ledit côté passager se divisant en une partie supérieure dans laquelle est implantée un dispositif de coussin gonflable de sécurité et une partie inférieure comprenant au moins un équipement de rangement avec au moins un compartiment de rangement; le véhicule étant remarquable en ce qu'il comprend en outre au moins un dispositif de support mobile entre une position escamotée et une position déployée, le dispositif de support étant destiné à la fixation d'un appareil électronique mobile et étant agencé au-dessus d'au moins un équipement de rangement. La traverse de planche de bord montre au moins deux portions dont une première portion monobranche et une deuxième portion montrant au moins deux branches disposées étagées l'une au-dessus de l'autre. Au moins un équipement de rangement est un tiroir mobile entre une position ouverte et une position fermée et la planche de bord est configurée pour que le tiroir s'insère entre deux branches de la traverse de planche de bord lorsqu'il est en position fermée.

Comme on l'aura compris à la lecture de la définition qui vient d'en être donnée, l'invention consiste à placer un dispositif de support d'un appareil mobile au-dessus d'un compartiment de rangement. L'agencement proposé est conçu pour que le coussin gonflable de sécurité puisse se déployer par le dessus de la planche de bord, et se placer entre le passager et l'appareil électronique mobile. Ce dernier, étant solidement amarré à la planche de bord au moyen de son dispositif de support, ne sera pas projeté sur le passager en cas de déploiement dudit coussin gonflable de sécurité. En effet, le dispositif de support est intégré à la planche de bord et ne peut pas se détacher et être projeté en cas de collision du véhicule. L'ajout d'un dispositif de support permet par ailleurs d'offrir une nouvelle fonctionnalité répondant aux demandes actuelles.

Comme le dispositif de support est disposé dans la partie supérieure de la planche de bord avec le dispositif de coussin gonflable de sécurité, l'espace dans la partie inférieure dédié à un ou plusieurs équipements de rangement est laissé libre permettant de combiner le dispositif de support avec un ou plusieurs équipements de rangement. Le ou les équipements de rangement peuvent occuper tout l'espace disponible dans la partie inférieure de la planche de bord, et l'occupation de l'espace est optimisée dans la planche de bord.

Dans des modes de réalisation, au moins un dispositif de support est mobile entre une position escamotée et une position déployée par translation le long d'un système comprenant au moins une glissière. Le système de déploiement par translation est simple et robuste.

De préférence, la ou les glissières sont disposées inclinées par rapport à l'horizontale. L'orientation de la glissière permet de placer un appareil électronique mobile à bonne hauteur devant l'utilisateur malgré la présence de la traverse de planche de bord.

Par rapport à un dispositif horizontal le dispositif de support occupe moins d'espace dans la direction longitudinale du véhicule laissant un espace permettant de fixer le dispositif de coussin gonflable de sécurité devant le dispositif de support avec une hauteur de planche de bord réduite. L'inclinaison préférée sera vers le bas selon une orientation de l'avant vers arrière du véhicule, de manière entre autres à ne pas entraver le déploiement du coussin gonflable de sécurité.

Avantageusement, au moins un équipement de rangement est un tiroir montrant au moins un compartiment de rangement, et/ou au moins un équipement de rangement est un bac montrant au moins un compartiment de rangement.

Le tiroir de rangement est un équipement de rangement qui permet de ranger indépendamment des objets plats comme des documents ou des appareils électroniques mobiles sans qu'ils soient endommagés par des chocs avec des objets plus volumineux. L'appareil électronique mobile peut ainsi être rangé en toute sécurité lorsqu'il n'est pas utilisé et/ou fixé sur le dispositif de support.

De préférence, le bac comprend une porte déplaçable entre une position ouverte et une position fermée ou le bac est monté pivotant par rapport à un axe de rotation entre une position ouverte et une position fermée.

Dans des modes de réalisation, le véhicule comprend au moins deux équipements de rangement agencés en dessous du ou des dispositifs de support. Avantageusement, le véhicule comprend au moins deux équipements de rangement agencés étagés l'un au-dessus de l'autre. De préférence au moins un équipement de rangement est un tiroir, au moins un équipement de rangement est un bac et au moins un tiroir est agencé au-dessus d'au moins un bac.

Le tiroir de rangement est placé de manière ergonomique au-dessus du bac de rangement pour que les jambes du passager ne gênent pas son déploiement.

Les branches de la traverse de planche de bord peuvent alors être intégrées entre les équipements de rangement et leur encombrement peut être réparti entre les équipements de rangement.

Avantageusement, au moins un équipement de rangement est un bac de rangement comprenant un compartiment de rangement principal et au moins un compartiment de rangement secondaire.

De préférence, le compartiment de rangement principal étant délimité par un ensemble de parois latérales, au moins un compartiment de rangement secondaire est accessible par une ouverture formée dans une des parois latérales du compartiment de rangement secondaire ; et/ou le compartiment de rangement principal comprend sur une de ses parois latérales une ouverture de service pour un accès à l'intérieur de la planche de bord depuis le bac de rangement.

Dans des modes de réalisation, au moins un équipement de rangement est un tiroir monté mobile dans un caisson, et au moins un équipement de rangement est un bac de rangement comprenant un compartiment de rangement principal et au moins un compartiment de rangement secondaire, et l'au moins un compartiment de rangement secondaire est fixé à la fois au compartiment de rangement principal et au caisson du tiroir ; et/ou au moins un équipement de rangement est un tiroir et au moins un équipement de rangement est un bac de rangement comprenant un compartiment de rangement principal et au moins un compartiment de rangement secondaire, et au moins un compartiment de rangement secondaire est disposé intercalé selon la direction verticale entre le compartiment de rangement principal et le tiroir.

De préférence, au moins un compartiment de rangement secondaire est fixé à la traverse de planche de bord. C'est avantageux car comme l'agencement est soumis à d'importantes vibrations, la fixation d'un compartiment secondaire à la traverse de planche de bord permet ainsi de rigidifier l'ensemble et de limiter l'apparition de vibrations et donc de bruits parasites.

Avantageusement, au moins un dispositif de support est fixé à la traverse de planche de bord et/ou au moins un équipement de rangement est fixé à la traverse de planche de bord.

De préférence, le véhicule comprend au moins deux équipements de rangement, au moins un équipement de rangement étant un tiroir at au moins un équipement de rangement étant un bac et lesdits équipements de rangement sont fixés à la traverse de planche de bord. Ces agencements permettent aussi de rigidifier la planche de bord et de limiter les vibrations pouvant être engendrées par le roulage du véhicule.

Dans des modes de réalisations, la traverse de planche de bord montre au moins deux portions dont une première portion monobranche et une deuxième portion montrant deux branches disposées étagées l'une au-dessus de l'autre de manière à montrer une branche supérieure et une branche inférieure et au moins un dispositif de coussin gonflable de sécurité est fixé à la branche supérieure de la traverse de planche de bord ; et/ou en ce qu'au moins un dispositif de support est fixé à la branche supérieure de la traverse de planche de bord.

De préférence, au moins un dispositif de support est fixé à ladite branche supérieure de manière à être disposé au moins en partie au-dessus de ladite branche supérieure.

Selon un second aspect, l'invention concerne une traverse de planche de bord pour véhicule selon le premier aspect ; la traverse de planche de bord montrant au moins deux portions dont une première portion monobranche et une deuxième portion montrant deux branches disposées étagées l'une au-dessus de l'autre lorsque la traverse de planche de bord est montée dans le véhicule de manière à montrer une branche supérieure et une branche inférieure.

De préférence, la traverse de planche de bord est configurée pour qu'une de ses branches soit disposée en avant de l'autre branche selon la direction longitudinale du véhicule lorsque la traverse de planche de bord est montée dans le véhicule et/ou pour qu'au moins la branche supérieure de la deuxième portion montre une section de diamètre inférieur au diamètre de la première portion monobranche.

D'autres particularités et caractéristiques de l'invention ressortiront de la description détaillée d'au moins un mode de réalisation avantageux présenté ci-dessous, à titre d'illustration, en se référant aux dessins annexés. Ceux-ci montrent :
[Fig.1] La figure 1 montre une vue de face d'un détail du côté passager de la planche de bord d'un véhicule automobile selon un mode de réalisation de l'invention ;
[Fig.2] La figure 2 montre une vue en perspective avant de la planche de bord de la figure 1 sans façade;
[Fig.3] La figure 3 montre une vue en coupe de la planche de bord du véhicule de la figure 1 au niveau du côté passager;
[Fig.4] La figure 4 montre une vue en perspective arrière de la planche de bord de la figure 1 sans façade et sans dispositif de support.

Dans la suite de la description, le terme « comprendre » est synonyme de « inclure » et n'est pas limitatif en ce qu'il autorise la présence d'autres éléments dans le véhicule la planche de bord ou la traverse de planche de bord auquel il fait référence. Il est entendu que le terme « comprendre » inclut les termes « consister en ».

De même, les termes « inférieur », « supérieur », « haut » et « bas » s'entendront selon leur définition usuelle, dans laquelle les termes « inférieur » et « bas » indiquent une proximité avec le sol plus importante selon la direction verticale que respectivement les termes « supérieur » et « haut ».

Les termes « longitudinal », transversal », « avant » et « arrière » s'entendront par rapport à l'orientation générale du véhicule tel que pris selon son sens normal de marche.

Dans la suite de la description, des éléments présentant une structure identique ou des fonctions analogues seront désignés par une même référence.

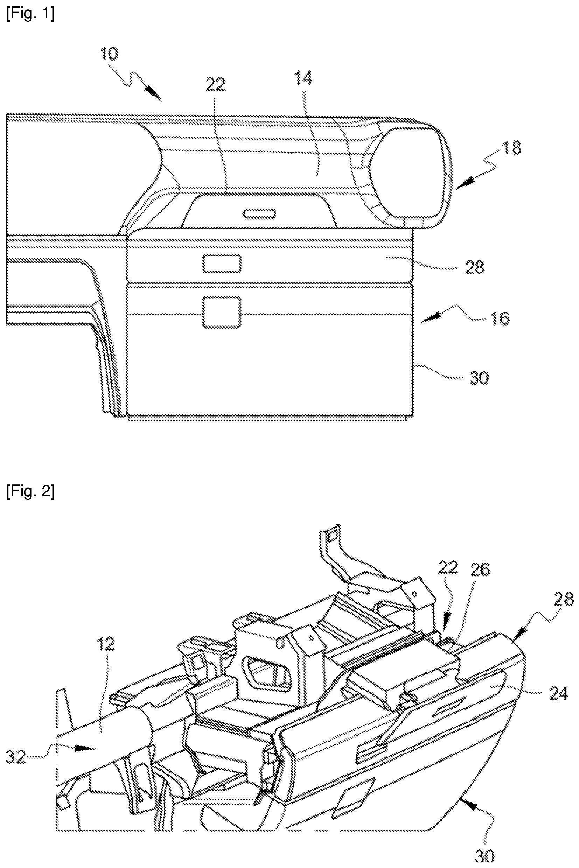

Un véhicule automobile comprend une planche de bord 10 transversale qui montre un côté conducteur agencé en regard d'un siège conducteur, une portion centrale, et un côté passager, montré à la figure 1, agencé en regard d'un siège passager avant non montré. La planche de bord est montée sur une traverse 12 de planche de bord, montrée à la figure 2, qui est fixée sur des éléments de caisse du véhicule non montrés.

Comme montré à la figure 1, la planche de bord 10 est recouverte par un élément d'habillage qui constitue une façade 14 et qui assure l'aspect visuel extérieur de la planche de bord. La planche de bord 10 comprend une partie inférieure 16 qui s'étend sensiblement jusqu'à la hauteur des genoux d'un passager, et une partie supérieure 18 qui s'étend au-dessus de la partie inférieure 16, et par exemple rejoint un pare-brise, non montré.

La planche de bord 10 comprend des équipements qui peuvent être agencés dans les parties inférieure 16 et supérieure 18 selon la configuration et les contraintes d'espace du véhicule. Selon l'invention, la partie inférieure 16 comprend au moins unéquipement de rangement avec au moins un compartiment de rangement. La partie inférieure 16 peut aussi comprendre plusieurs équipements. Dans le mode de réalisation de la figure 1, la partie inférieure 16 comprend deux équipements de rangement qui seront décrits plus bas.

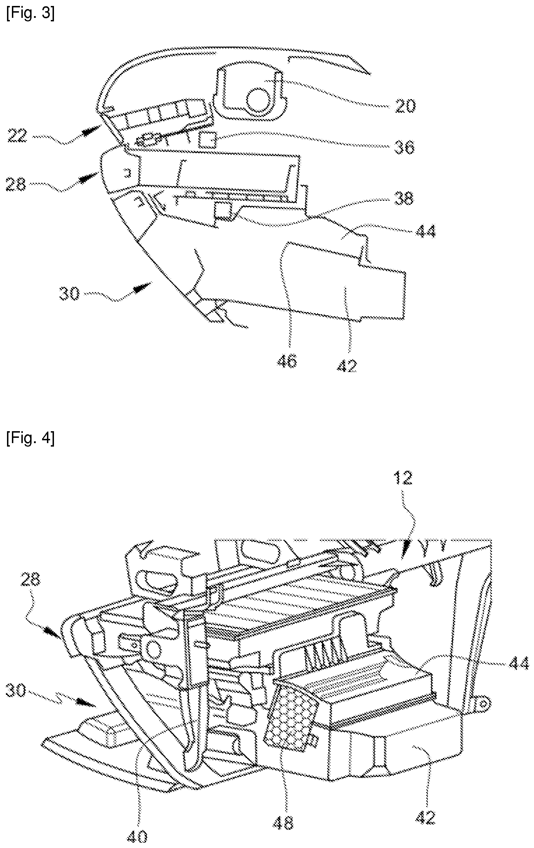

Dans la partie supérieure 18, la planche de bord comprend un dispositif de coussin gonflable de sécurité 20 montré à la figure 3, qui est configuré pour se déployer au-dessus de la planche de bord et vers le passager avant, en cas de choc frontal du véhicule. La partie supérieure comprend aussi au moins un dispositif de support 22 mobile entre une position escamotée et une position déployée. Le dispositif de support 22 est destiné à la fixation d'un appareil électronique mobile et est agencé au-dessus d'au moins un équipement de rangement. Par appareil électronique mobile, on entend par exemple un appareil de type téléphone mobile, smartphone, tablette numérique ou autre.

Le mode de réalisation des figures 1 à 4 montre la planche de bord 10 d'un véhicule automobile de type berline, mais l'homme du métier comprendra que l'invention peut être adaptée à d'autres types de véhicule, comme un véhicule utilitaire ou de type utilitaire sportif. Ainsi, selon des variantes, un ou plusieurs dispositifs de support peuvent être agencés dans la partie supérieure de la planche de bord, si l'espace disponible le permet.

Les dispositifs de support peuvent par exemple être disposés alignés dans une direction horizontale. Les dispositifs de support peuvent aussi être alignés horizontalement ou selon une autre direction. On pourra par exemple avoir un dispositif de support pour un petit appareil électronique mobile comme un smartphone, et un autre dispositif de support pour un grand appareil électronique mobile comme une liseuse, une tablette.

Dans le mode de réalisation des figures 2 à 4, au moins un dispositif de support 22 est mobile entre une position escamotée et une position déployée par translation le long d'un système comprenant au moins une glissière. Le dispositif de support 22 comprend une partie de façade 24 visible à la figure 2, et une partie interne 26 visible à la figure 3.

La partie de façade 24 comprend des moyens d'actionnement permettant de déployer et d'escamoter le dispositif de support 22. De manière alternative, les moyens d'actionnement peuvent aussi être fixes et disposés ailleurs sur la façade ou à disposition du passager avant. Le déploiement du dispositif de support 22 peut être fait manuellement ou de manière automatisée par l'ajout d'un système de déploiement électrique ou pneumatique.

La partie de façade 24 du dispositif de support 22 comprend en outre des moyens de fixation pour un appareil électronique mobile. Ces moyens de fixation peuvent permettre la fixation directe d'un appareil électronique mobile ou être compatible avec une coque spécifique d'un appareil électronique mobile.

La partie interne 26 du dispositif de support 22 comprend au moins une glissière permettant de le monter sur la traverse 12 de planche de bord. Le dispositif de support 22 étant mobile en translation au moyen de cette ou ces glissières. La ou les glissières sont formées par des rails ou une rainure dans un caisson enveloppant ledit dispositif de support 22. Le système de glissière du dispositif de support 22 est fixé à la traverse 12 de planche de bord de manière directe ou indirecte ; de préférence, de manière directe.

En position déployée, la partie de façade 24 du dispositif de support 22 est à l'écart de la façade 14. La partie interne 26 du dispositif de support 22 est maintenue en porte à faux par le système de glissière.

En position escamotée, le dispositif de support 22 est rentré dans la façade 14 de manière à ce que seule la partie de façade 24 soit visible. La partie de façade est alors de préférence en affleurement avec la façade 14 dans sa partie supérieure 18.

En fonction de l'espace disponible dans la planche de bord 10, la ou les glissières sont disposées horizontales ou inclinées par rapport à l'horizontale.

Par exemple, dans le mode de réalisation des figures 2 à 4, le dispositif de support 22 est monté mobile sur des glissières inclinées vers le bas en direction de l'arrière du véhicule. C'est-à-dire que le bord avant des glissières est surélevé par rapport à un bord arrière des glissières comme montré à la figure 3. L'avant et l'arrière s'entendent par rapport à la direction longitudinale du véhicule tel que pris selon son sens normal de marche.

La partie inférieure 16 de la façade 14 comprend au moins deux équipements de rangement agencés en dessous du ou des dispositifs de support 22. Les équipements de rangement peuvent être agencés horizontalement, ou verticalement. Dans le mode réalisation des figures 1 à 4, la partie de façade comprend deux équipements de rangement (28, 30) agencés étagés l'un au-dessus de l'autre.

Au moins un équipement de rangement (28, 30) peut être formé par un tiroir 28 montrant au moins un compartiment de rangement, et/ou au moins un équipement de rangement (28, 30) peut être formé par un bac 30 montrant au moins un compartiment de rangement comme montrés à la figure 3.

Le tiroir 28 peut être un tiroir de rangement classique avec un caisson fixé sur la traverse 12 de planche de bord et comprenant des glissières. Le tiroir 28 est mobile entre une position escamotée en affleurement avec la façade et des positions déployées hors de la façade. Le tiroir 28 se déploie de préférence horizontalement pour faciliter le stockage horizontal d'objets. Le tiroir 28 est dimensionné en fonction de l'espace disponible dans la planche de bord, mais on préfèrera que les dimensions du tiroir permettent le rangement d'un objet électronique mobile comme par exemple une tablette graphique.

Le bac 30 permet préférentiellement le rangement de plus gros objets que le tiroir 28. Le bac 30 peut être monté pivotant par rapport à un axe de rotation entre une position ouverte et une position fermée ou comprendre une porte déplaçable entre une position ouverte et une position fermée, comme montré à la figure 3.

Le tiroir 28 et le bac 30 sont ici agencés verticalement l'un au-dessus de l'autre. Pour simplifier l'accès du tiroir 28, celui-ci est agencé au-dessus du bac 30.

Les éléments de rangement sont fixés à la traverse 12 de planche de bord. La traverse 12 de planche de bord est une pièce métallique longiligne qui est disposée transversalement dans la planche de bord et est fixée en ses deux extrémités à la caisse du véhicule. La traverse 12 de planche de bord comprend des organes de fixation pour divers éléments comme par exemple des éléments de la planche de bord.

La traverse 12 de planche de bord montre au moins deux portions dont une première portion monobranche et une deuxième portion montrant au moins deux branches. La traverse 12 de planche de bord peut comprendre des portions supplémentaires avec une ou plusieurs branches selon les éléments fixés dessus.

Ici, la traverse 12 de planche de bord comprend une première portion monobranche montrant une branche principale 32 qui s'étend dans le côté conducteur et dans la zone centrale de la planche de bord, et une deuxième portion montrant deux branches secondaires (36, 38) disposées étagées l'une au-dessus de l'autre qui s'étendent dans le côté passager de la planche de bord.

La branche principale 32, et les branches secondaires (36, 38) sont tubulaires longilignes. Les branches principale et secondaires peuvent être de dimensions identiques mais les branches secondaires (36, 38) sont avantageusement de sections plus petites que la section de la branche principale 32. Les branches secondaires (36, 38) sont jointes entre elles à chaque extrémité par des entretoises et sont fixées à une extrémité à la branche principale 32, et à l'autre extrémité à la caisse du véhicule. Ainsi la traverse 12 de planche de bord à une forme dite en Y.

Au moins une des branches secondaires (36, 38) de la traverse 12 de planche de bord peut être intégrée entre les équipements de rangement (28, 30) de manière à limiter son encombrement.

Par exemple, comme montré à la figure 3, les deux branches secondaires peuvent être étagées l'une au-dessus de l'autre de manière à montrer une branche supérieure 36 et une branche inférieure 38.

Le dispositif de coussin gonflable de sécurité 20 peut alors être fixé à la branche supérieure 38 de la traverse 12 de planche de bord de manière à se trouver à proximité d'un retour horizontal de la façade 14 de la planche de bord. En cas de collision du véhicule, le coussin gonflable de sécurité 20 pourra se déployer le long de la façade de la planche de bord en redescendant vers la partie inférieure 16 de cette dernière.

Comme montré à la figure 3, le dispositif de support 22 comprend préférentiellement un bord avant fixé au-dessus de ladite branche supérieure 38 de la traverse 12 de planche de bord et un bord arrière agencé plus bas au-dessus du tiroir 28. Par exemple, le bord avant du dispositif de support 22 peut être fixé au même niveau que le coussin gonflable de sécurité. Les dimensions du dispositif de support 22 sont alors prédéterminées de manière à ce que ce dernier ne gêne pas le déploiement du coussin gonflable de sécurité. Par exemple, la longueur du dispositif de support 22 dans la direction longitudinale du véhicule est entre 8 et 15 cm en position escamoté, et la course de déploiement du dispositif de support 22 est de moins de 15 cm, de préférence moins de 10 cm.

Le tiroir 28 de rangement peut être monté de manière à s'escamoter entre les deux branches secondaires de la traverse 12 de planche de bord. Le caisson du tiroir 28 peut alors être fixé sur les branches secondaires ou sur les entretoises des branches secondaires.

Le bac 30 peut être fixé en-dessous du tiroir 28 sur une des branches secondaires (36, 38) de la traverse 12 de planche bord ; de préférence, sur la branche inférieure 36. Alternativement ou en complément, la traverse 12 de planche de bord peut comprendre des organes de fixation formant des branches de fixation 40 verticales sur lesquelles est fixé le bac 30.

Le bac 30 peut être un bac comprenant un ou plusieurs compartiments de rangement pour des objets. Le bac 30 est formé de préférence par injection de matière plastique ou composite. Les dimensions du bac sont de préférence adaptées de manière à pouvoir contenir au moins une bouteille d'eau en position couchée.

Le bac 30 comprend par exemple un compartiment de rangement principal 42 délimité par un ensemble de parois latérales. Les parois latérales du compartiment de rangement principal comprennent une paroi supérieure, une paroi inférieure, deux parois latérales, et une paroi de fond.

Le bac 30 peut comprendre un ou plusieurs compartiments de rangement secondaires 44 agencés dans le compartiment de rangement principal ou comme ici agencés sur une des parois du compartiment de rangement principal. Par exemple, comme montré aux figures 3 et 4, le bac 30 comprend en outre un compartiment de rangement secondaire 44 agencé sur la paroi supérieure du compartiment de rangement principal 42.

Dans le mode de réalisation des figures 3 et 4, le compartiment de rangement secondaire est une pièce distincte du compartiment de rangement principal formé par injection de matière plastique ou composite. Le compartiment de rangement secondaire 44 est fixé sur la paroi supérieure du compartiment de rangement principal 42. Pour accéder au compartiment de rangement secondaire 44, la paroi supérieure du compartiment de rangement principal comprend une ouverture 46.

Le compartiment de rangement secondaire 44 peut être agencé autour du compartiment de rangement principal en fonction de l'espace disponible dans la planche de bord. Par exemple, comme montré à la figure 3, le compartiment de rangement secondaire peut être disposé intercalé selon la direction verticale entre le compartiment de rangement principal 42 et le tiroir 28.

Le compartiment de rangement secondaire 44 peut être fixé sur le compartiment de rangement principal 42 par emboitage élastique, par vis, ou par tout moyen approprié. Pour assurer une meilleure rigidité de l'ensemble, le compartiment de rangement secondaire 44 peut aussi être fixé à la fois au caisson du tiroir 28 qui se trouve au-dessus du bac, et à la traverse 12 de planche de bord, par exemple aux branches de fixation 40 de la traverse 12 de planche de bord.

Le bac 30 comprend aussi une ouverture de service 48 fermée par un couvercle amovible, qui permet à un utilisateur d'accéder à des éléments se trouvant derrière la façade 14 de la planche de bord depuis l'intérieur du bac 30. L'ouverture de service 48 peut être ménagée sur une paroi latérale du compartiment de rangement principal 42 du bac et peut s'étendre également sur une paroi latérale du compartiment de rangement secondaire 44. Il est alors possible de prévoir une ouverture de service plus importante que si elle était uniquement prévue sur une paroi latérale du compartiment principal et donc d'améliorer le confort de l'utilisateur. L'ouverture de service 48 est avantageusement fermée par un couvercle ou une grille amovible. L'ouverture de service 48 permettra par exemple d'accéder à un boîtier de fusible non montré.

## Revendications

1. Véhicule automobile comprenant une planche de bord (10) transversale montée sur une traverse (12) de planche de bord; la planche de bord montrant un côté passager agencé en regard d'un siège passager avant, ledit côté passager se divisant en une partie supérieure (18) dans laquelle est implantée un dispositif de coussin gonflable de sécurité (20) et une partie inférieure (16) comprenant au moins un équipement de rangement (28, 30) avec au moins un compartiment de rangement; le véhicule comprend en outre au moins un dispositif de support (22) mobile entre une position escamotée et une position déployée, le dispositif de support (22) étant destiné à la fixation d'un appareil électronique mobile et étant agencé au-dessus d'au moins un équipement de rangement (28, 30), **caractérisé en ce que** la traverse (12) de planche de bord montre au moins deux portions dont une première portion monobranche et une deuxième portion montrant au moins deux branches (36, 38) disposées étagées l'une au-dessus de l'autre, au moins un équipement de rangement est un tiroir (28) mobile entre une position ouverte et une position fermée et la planche de bord (10) est configurée pour que le tiroir s'insère entre deux branches de la traverse (12) de planche de bord lorsqu'il est en position fermée.

2. Véhicule automobile selon la revendication 1, **caractérisé en ce qu'**au moins un dispositif de support (22) est mobile entre une position escamotée et une position déployée par translation le long d'un système comprenant au moins une glissière ; de préférence, la ou les glissières sont disposées inclinées par rapport à l'horizontale.

3. Véhicule automobile selon la revendication 1 ou 2, **caractérisé en ce qu'**au moins un équipement de rangement est un tiroir (28) montrant au moins un compartiment de rangement, et/ou **en ce qu'**au moins un équipement de rangement est un bac (30) montrant au moins un compartiment de rangement ; de préférence, le bac comprend une porte déplaçable entre une position ouverte et une position fermée ou le bac est monté pivotant par rapport à un axe de rotation entre une position ouverte et une position fermée.

4. Véhicule automobile selon l'une des revendications 1 à 3, **caractérisé en ce qu'**il comprend au moins deux équipements de rangement (28, 30) agencés en dessous du ou des dispositifs de support (22), et/ou **en ce qu'**il comprend au moins deux équipements de rangement (28, 30) agencés étagés l'un au-dessus de l'autre ; de préférence au moins un équipement de rangement est un tiroir (28), au moins un équipement de rangement est un bac (30) et au moins un tiroir (28) est agencé au-dessus d'au moins un bac (30).

5. Véhicule selon l'une des revendications précédentes, **caractérisé en ce qu'**au moins un équipement de rangement est un bac (30) de rangement comprenant un compartiment de rangement principal (42) et au moins un compartiment de rangement secondaire (44) ; de préférence, le compartiment de rangement principal (42) étant délimité par un ensemble de parois latérales, au moins un compartiment de rangement secondaire (44) est accessible par une ouverture formée dans une des parois latérales du compartiment de rangement secondaire ; et/ou le compartiment de rangement principal (42) comprend sur une de ses parois latérales une ouverture de service pour un accès à l'intérieur de la planche de bord depuis le bac de rangement.

6. Véhicule selon l'une des revendications précédentes , **caractérisé en ce qu'**au moins un équipement de rangement est un tiroir (28) monté mobile dans un caisson, et au moins un équipement de rangement est un bac (30) de rangement comprenant un compartiment de rangement principal (42) et au moins un compartiment de rangement secondaire (44), et **en ce que** l'au moins un compartiment de rangement secondaire est fixé à la fois au compartiment de rangement principal et au caisson du tiroir ; et/ou **en ce qu'**au moins un équipement de rangement est un tiroir (28) et au moins un équipement de rangement est un bac (30) de rangement comprenant un compartiment de rangement principal (42) et au moins un compartiment de rangement secondaire (44), et **en ce qu'**au moins un compartiment de rangement secondaire est disposé intercalé selon la direction verticale entre le compartiment de rangement principal et le tiroir.

7. Véhicule selon l'une des revendications précédentes, **caractérisé en ce qu'**au moins un dispositif de support (22) est fixé à la traverse (12) de planche de bord et/ou **en ce qu'**au moins un équipement de rangement (28, 30) est fixé à la traverse (12) de planche de bord ; de préférence, le véhicule comprend au moins deux équipements de rangement (28, 30), au moins un équipement de rangement étant un tiroir (28) at au moins un équipement de rangement étant un bac (30) et lesdits équipements de rangement (28, 30) sont fixés à la traverse (12) de planche de bord.

8. Véhicule selon l'une des revendications précédentes , **caractérisé en ce que** la traverse (12) de planche de bord montre au moins deux portions dont une première portion monobranche et une deuxième portion montrant deux branches disposées étagées l'une au-dessus de l'autre de manière à montrer une branche supérieure (36) et une branche inférieure (38) et **en ce qu'**au moins un dispositif de coussin gonflable de sécurité (20) est fixé à la branche supérieure de la traverse (12) de planche de bord et/ou **en ce qu'**au moins un dispositif de support (22) est fixé à la branche supérieure (36) de la traverse (12) de planche de bord ; de préférence, au moins un dispositif de support (22) est fixé à ladite branche supérieure (36) de manière à être disposé au moins en partie au-dessus de ladite branche supérieure.

## Patentansprüche

1. Kraftfahrzeug, das ein querverlaufendes Armaturenbrett (10) aufweist, das an einem Armaturenbrettquerträger (12) angebracht ist; wobei das Armaturenbrett eine Beifahrerseite aufweist, die gegenüber einem vorderen Beifahrersitz angeordnet ist, wobei sich die Beifahrerseite in einen oberen Abschnitt (18) teilt, in dem eine Airbagvorrichtung (20) angebracht ist, und einen unteren Abschnitt (16), der mindestens eine Aufbewahrungseinrichtung (28, 30) mit mindestens einem Aufbewahrungsabteil aufweist; wobei das Fahrzeug ferner mindestens eine dazwischen bewegliche Haltevorrichtung (22) aufweist Eine eingezogene Stellung und eine ausgefahrene Stellung, wobei die Haltevorrichtung (22) zur Befestigung eines mobilen elektronischen Geräts bestimmt ist und über mindestens einer Aufbewahrungseinrichtung (28, 30) angeordnet ist, **dadurch gekennzeichnet, dass** die Armaturenbrettquerung (12) mindestens zwei Abschnitte aufweist, von denen ein erster einstückiger Abschnitt und ein zweiter Abschnitt mindestens zwei übereinander angeordnete Schenkel (36, 38) aufweist, wobei mindestens eine Aufbewahrungseinrichtung eine Schublade (28) ist, die zwischen einer offenen und einer geschlossenen Stellung und dem Armaturenbrett beweglich ist (10) so ausgebildet ist, dass die Schublade in geschlossener Stellung zwischen zwei Schenkeln der Armaturenbrettbrücke (12) einschiebbar ist.

2. Kraftfahrzeug nach Anspruch 1, **dadurch gekennzeichnet, dass** mindestens eine Stützvorrichtung (22) zwischen einer eingezogenen Position und einer ausgezogenen Position durch Verschieben entlang eines Systems beweglich ist, das mindestens eine Gleitschiene umfasst; wobei vorzugsweise die mindestens eine Gleitschiene schräg zur Horizontalen angeordnet ist.

3. Kraftfahrzeug nach Anspruch 1 oder 2, **dadurch gekennzeichnet, dass** wenigstens eine Aufbewahrungseinrichtung eine Schublade (28) ist, die wenigstens ein Aufbewahrungsfach aufweist, und/oder dass wenigstens eine Aufbewahrungseinrichtung eine Wanne (30) ist, die wenigstens ein Aufbewahrungsfach aufweist; wobei vorzugsweise die Wanne eine Tür aufweist, die zwischen einer geöffneten und einer geschlossenen Position bewegbar ist, oder die Wanne relativ zu einer Drehachse zwischen einer geöffneten und einer geschlossenen Position schwenkbar gelagert ist.

4. Kraftfahrzeug nach einem der Ansprüche 1 bis 3, **dadurch gekennzeichnet, dass** es mindestens zwei unterhalb der mindestens einen Stützeinrichtung (22) angeordnete Aufbewahrungseinrichtungen (28, 30) aufweist und/oder dass es mindestens zwei übereinander gestaffelt angeordnete Aufbewahrungseinrichtungen (28, 30) aufweist; vorzugsweise mindestens eine Aufbewahrungseinrichtung ein Schieber (28) ist, mindestens eine Aufbewahrungseinrichtung ein Behälter (30) ist und mindestens ein Schieber (28) darüber angeordnet ist mindestens einer Schale (30).

5. Fahrzeug nach einem der vorhergehenden Ansprüche, **dadurch gekennzeichnet, dass** wenigstens eine Aufbewahrungseinrichtung eine Aufbewahrungswanne (30) ist, die ein Hauptaufbewahrungsfach (42) und wenigstens ein Unteraufbewahrungsfach (44) umfasst; wobei vorzugsweise das Hauptaufbewahrungsfach (42) durch eine Gruppe von Seitenwänden begrenzt ist, wenigstens ein Unteraufbewahrungsfach (44) durch eine Öffnung zugänglich ist, die in einer der Seitenwände des Unteraufbewahrungsfachs ausgebildet ist; und/oder das Hauptaufbewahrungsfach (42) an einer seiner Seitenwände eine Bedienungsöffnung für einen Zugang zum Inneren aufweist vom Armaturenbrett aus der Aufbewahrungsbox.

6. Fahrzeug nach einem der vorhergehenden Ansprüche, **dadurch gekennzeichnet, dass** mindestens eine Aufbewahrungseinrichtung eine Schublade (28) ist, die in einem Kasten beweglich montiert ist, und dass mindestens eine Aufbewahrungseinrichtung eine Aufbewahrungswanne (30) ist, die ein Hauptaufbewahrungsfach (42) und mindestens ein Unteraufbewahrungsfach (44) umfasst, und dass das mindestens eine Unteraufbewahrungsfach sowohl an dem Hauptaufbewahrungsfach als auch an dem Schubladenkasten befestigt ist; und/oder dass mindestens eine Aufbewahrungseinrichtung eine Schublade (28) und mindestens eine Aufbewahrungseinrichtung ist ist ein Aufbewahrungsbehälter (30) mit einem Hauptaufbewahrungsfach (42) und mindestens einem Sekundäraufbewahrungsfach (44), wobei mindestens ein Sekundäraufbewahrungsfach in vertikaler Richtung zwischen dem Hauptaufbewahrungsfach und der Schublade angeordnet ist.

7. Fahrzeug nach einem der vorhergehenden Ansprüche, **dadurch gekennzeichnet, dass** mindestens eine Haltevorrichtung (22) an der Armaturenbretttraverse (12) befestigt ist und/oder dass mindestens eine Aufbewahrungseinrichtung (28, 30) an der Armaturenbretttraverse (12) befestigt ist; vorzugsweise umfasst das Fahrzeug mindestens zwei Aufbewahrungsvorrichtungen (28, 30), wobei mindestens eine Aufbewahrungseinrichtung eine Schublade (28) ist, wobei mindestens eine Aufbewahrungseinrichtung eine Wanne (30) ist und die Aufbewahrungsvorrichtungen (28, 30) an der Armaturenbretttraverse (12) befestigt sind.

8. Fahrzeug nach einem der vorhergehenden Ansprüche, **dadurch gekennzeichnet, dass** der Armaturenbrettquerträger (12) mindestens zwei Abschnitte aufweist, von denen ein erster einstückiger Abschnitt und ein zweiter Abschnitt zwei Schenkel aufweisen, die derart übereinander angeordnet sind, dass sie einen oberen Schenkel (36) und einen unteren Schenkel (38) aufweisen, und dass mindestens eine Airbagvorrichtung (20) am oberen Schenkel des Armaturenbrettquerträgers (12) befestigt ist und/oder dass mindestens eine Stützvorrichtung vorgesehen ist (22) am oberen Schenkel (36) des Armaturenbrettquerträgers (12) befestigt ist, wobei vorzugsweise mindestens eine Haltevorrichtung (22) am oberen Schenkel (36) so befestigt ist, dass sie zumindest teilweise über dem oberen Schenkel angeordnet ist.

## Claims

1. Motor vehicle comprising a transverse dashboard (10) mounted on a dashboard crosspiece (12); the dashboard showing a passenger side arranged facing a front passenger seat, said passenger side being divided into an upper part (18) in which a safety airbag device (20) is installed and a lower part (16) comprising at least one piece of stowage equipment (28, 30) with at least one stowage compartment; the vehicle further comprises at least one support device (22) movable between a retracted position and a deployed position, the support device (22) being intended for fixing a mobile electronic apparatus and being arranged above at least one piece of stowage equipment (28, 30), wherein the dashboard cross-member (12) shows at least two portions, a first single-branch portion of which and a second portion showing at least two branches (36, 38) arranged staggered one above the other, at least one piece of stowage equipment is a drawer (28) movable between an open position and a closed position and the dashboard (10) is configured to insert the drawer between two legs of the dashboard crosspiece (12) when in a closed position.

2. Motor vehicle according to claim 1, wherein at least one support device (22) is movable between a retracted position and a position deployed by translation along a system comprising at least one slide; preferably, the slide or slides are disposed inclined by report to the horizontal.

3. Motor vehicle according to claim 1 or 2, **characterised in that** at least one piece of stowage equipment is a drawer (28) showing at lecast one stowage compartment, and/or **in that** at least one piece of stowage equipment is a tray (30) showing at least one stowage compartment; preferably, the tray comprises a gate movable between an open position and a closed position or the tray is pivotally mounted by report at an axis of rotation between an open position and a closed position.

4. Motor vehicle according to one of claims 1 to 3, **characterised in that** it comprises at least two stowage equipments (28, 30) arranged below the support device(s) (22), and/or **in that** it comprises at least two stowage equipments (28, 30) arranged in stages one above the other; preferably at least one stowage equipment is a slide (28), at least one stowage equipment is a tray (30) and at least one slide (28) is arranged above at least one tray (30).

5. Vehicle according to one of the previous claims, wherein at least one stowage unit is a stowage tray (30) comprising a main stowage compartment (42) and at least one secondary stowage compartment (44); preferably, the main stowage compartment (42) being delimited by a set of side walls, at least one secondary stowage compartment (44) is accessible through an opening formed in one of the side walls of the secondary stowage compartment; and/or the main stowage compartment (42) comprises on one of its side walls a service opening for a inside the dashboard from the storage tray.

6. Vehicle according to one of the previous claims, wherein at least one stowage unit is a drawer (28) movably mounted in a caisson, and at least one stowage unit is a stowage tray (30) comprising a main stowage unit (42) and at least one secondary stowage unit (44), and wherein the at least one secondary stowage unit is fixed both to the main stowage unit and to the caisson of the drawer; and/or wherein at least one stowage unit is a drawer (28) and at least one stowage equipment is a tray stowage (30) comprising a main stowage compartment (42) and at least one secondary stowage compartment (44), and at least one secondary stowage compartment is arranged interposed along the vertical management between the main stowage compartment and the drawer.

7. Vehicle according to one of the previous claims, **characterised in that** at least one support device (22) is fixed to the dashboard cross-member (12) and/or **in that** at least one piece of stowage equipment (28, 30) is fixed to the dashboard cross-member (12); preferably, the vehicle comprises at least two pieces of stowage equipment (28, 30), at least one piece of stowage equipment being a drawer (28) and at least one piece of stowage equipment being a tray (30) and said pieces of stowage equipment (28, 30) are fixed to the dashboard cross-member (12).

8. Vehicle according to one of the previous claims, wherein the dashboard cross-member (12) shows at least two portions, a first single-branch portion of which and a second portion showing two branches arranged staggered one above the other so as to show an upper branch (36) and a lower branch (38) and wherein at least one safety inflatable cushion device (20) is fixed to the upper branch of the dashboard cross-member (12) and/or at least one support device (22) is fixed to the upper branch (36) of the dashboard crosspiece (12); preferably, at least one support device (22) is fixed to said upper branch (36) so as to be arranged at least in part above said upper branch.
